# FASCICULE DE BREVET EUROPEEN

(11) **EP 1 617 097 B1**
(45) Date de publication et mention de la délivrance du brevet: **10.03.2010**
(21) Numéro de dépôt: 05014444.3
(22) Date de dépôt: 04.07.2005
(51) Int. Cl.: F16D 65/14

(54) **Dispositif de blocage sélectif à piston rotatif pour un frein hydraulique**
Einrichtung mit einem Kolben zum selektiven Sperren einer hydraulischen Bremse.
Selective Locking device with a rotary piston for an hydraulic brake.

(30) Priorité: 07.07.2004 FR 0407593
(43) Date de publication de la demande: 18.01.2006
(73) Titulaire: ROBERT BOSCH GMBH, 70442 Stuttgart (DE)
(72) Inventeur: Dupuis, Vincent, 94100 Saint Maur (FR)
(74) Mandataire: Hurwic, Aleksander Wiktor

(56) Documents cités:
- WO-A1-2004/050443
- FR-A1- 2 389 043
- US-A1- 2002 074 466

## Description

L'invention concerne, de façon générale, les techniques relatives au freinage sur les véhicules automobiles.

Des freins à disque comportant un dispositif de blocage sont décrits dans FR 2 389 043.

Plus précisément, l'invention concerne un dispositif de blocage sélectif pour frein hydraulique, comprenant un cylindre hydraulique relié à une source de fluide hydraulique, un piston monté sélectivement coulissant dans le cylindre depuis une position reculée vers une position avancée en réponse à l'établissement d'une haute pression dans le cylindre, et des moyens de retenue pour maintenir mécaniquement le piston en position avancée.

La conception des freins hydrauliques, et en particulier l'implantation de la fonction de frein de parking dans ces freins, doivent en permanence surmonter la difficulté que représente la nécessité de concilier des contraintes d'encombrement maximum de plus en plus sévères, avec une densité de pièces mécaniques relativement élevée.

L'invention, qui se situe dans ce contexte, a précisément pour but de proposer un dispositif de blocage sélectif pour frein hydraulique, de réalisation simple et peu encombrante, remplissant la fonction requise de frein de parking.

A cette fin, le dispositif de l'invention, par ailleurs conforme à la définition générique qu'en donne le préambule ci-dessus, est essentiellement caractérisé en ce qu'il comprend des premiers moyens de sollicitation en rotation et des seconds moyens de sollicitation en rotation agissant en sens inverse des premiers, en ce que les moyens de retenue comprennent une colonne télescopique formée d'un élément mâle et d'un élément femelle coaxiaux libres en translation axiale relative dans une première position de rotation relative et bloqués en translation axiale relative dans une seconde position de rotation relative, en ce qu'un premier de ces éléments est solidaire du piston et en ce qu'un second de ces éléments est monté à rotation par rapport au cylindre, est solidaire du cylindre en translation, et sélectivement commandé en rotation par les premiers moyens de sollicitation en rotation et par les seconds moyens de sollicitation en rotation

Il est par exemple possible de prévoir que les premiers moyens de sollicitation en rotation opèrent sélectivement une rotation du second élément dans un premier sens propre à assurer le blocage des deux éléments en translation, et que les seconds moyens de sollicitation en rotation opèrent sélectivement une rotation du second élément dans un second sens inverse du premier et propre à assurer le libre mouvement des deux éléments en translation.

De manière avantageuse, les premiers moyens de sollicitation en rotation comprennent une chambre auxiliaire partagée en trois compartiments dont le premier et le troisième sont reliés à la pression atmosphérique et dont le deuxième est sélectivement relié à la source de fluide hydraulique, un piston auxiliaire solidaire du second élément, monté à rotation dans la chambre auxiliaire et séparant les premier et deuxième compartiments, un clapet monté à rotation dans la chambre auxiliaire et séparant les second et troisième compartiments, un ressort sollicitant le clapet en rotation vers le piston auxiliaire, une butée limitant la rotation du piston auxiliaire et la rotation du clapet à moins d'un tiers de tour, une entrée de la chambre auxiliaire, s'ouvrant dans le deuxième compartiment, et une électrovalve reliant sélectivement l'entrée de la chambre auxiliaire à la source de fluide hydraulique.

Les seconds moyens de sollicitation en rotation peuvent alors simplement comprendre un ressort de torsion précontraint entre le cylindre et le second élément.

Dans un mode de réalisation possible de l'invention, il est prévu que les éléments mâle et femelle soient respectivement constitués d'un axe et d'un manchon présentant des sections transversales respectivement externe et interne non circulaires, que la section transversale externe de l'axe présente des dimensions minimale et maximale, que la section transversale interne du manchon présente des dimensions minimale et maximale, que les dimensions minimale et maximale de la section externe de l'axe soient respectivement inférieures aux dimensions minimale et maximale de la section interne du manchon, et que la dimension maximale de la section externe de l'axe soit supérieure à la dimension minimale de la section interne du manchon, l'axe et le manchon étant respectivement pourvus, sur la dimension maximale de la section externe de l'axe et sur la dimension minimale de la section interne du manchon, de reliefs de retenue axiale susceptibles de s'interpénétrer.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma général du dispositif de l'invention;
- la figure 2 est une vue en coupe axiale d'une partie d'un dispositif conforme à l'invention;
- les figures 3a à 3c sont des vues en coupe du dispositif de la figure 2, correspondant à des états différents de ce dispositif, la coupe étant observée suivant l'incidence définie par les lignes III-III de la figure 2;
- la figure 4 est une vue en coupe transversale d'une colonne télescopique utilisée dans le dispositif de la figure 2; et
- la figure 5 est un diagramme représentant, en fonction du temps, l'évolution de divers paramètres physiques ou d'états internes du dispositif de l'invention.

Comme annoncé précédemment, l'invention concerne un dispositif de blocage sélectif pour frein hydraulique.

Ce dispositif comprend au moins, de façon connue en soi, un cylindre hydraulique 10 dans lequel un piston 11 est monté coulissant, le cylindre 10 étant relié à une source de fluide hydraulique SFH délivrant ce fluide sous une pression P relativement haute ou relativement basse.

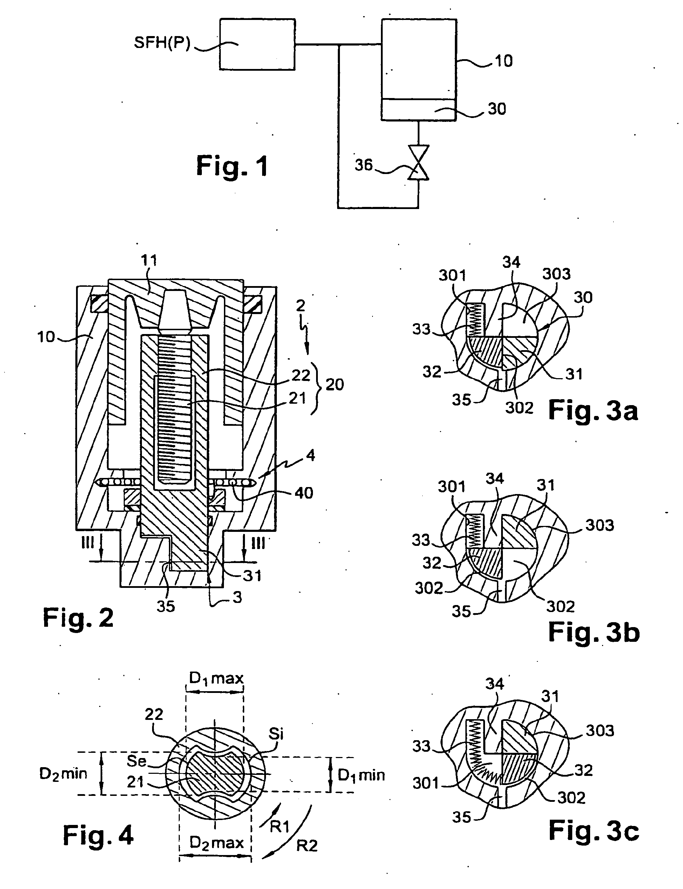

Lors de l'établissement d'une haute pression dans le cylindre 10, le piston 11 coulisse dans ce cylindre 10 depuis une position reculée vers une position avancée, à savoir vers le haut sur la figure 2.

Ce dispositif comprend également des moyens de retenue 2, destinés à maintenir mécaniquement le piston 11 en position avancée, et comprenant en l'occurrence une colonne télescopique 20 formée d'un élément mâle 21 et d'un élément femelle 22 coaxiaux, libres en translation axiale relative dans une première position de rotation relative, et bloqués en translation axiale relative dans une seconde position de rotation relative.

L'un de ces éléments 21 et 22 est solidaire du cylindre 10 en translation et monté à rotation par rapport à ce cylindre 10, l'autre élément étant solidaire du piston 11.

Par exemple, l'élément mâle 21 est constitué par un axe solidaire du piston 11, et l'élément femelle 22 est constitué par un manchon monté fixe en translation et libre en rotation par rapport au cylindre 10, cet axe et ce manchon présentant des sections transversales respectivement externe et interne non circulaires, Se et Si, comme le montre la figure 4.

Dans la mesure où aucune de ces sections n'est circulaire, chacune d'elles présente des dimensions minimale et maximale, à savoir D1min et D1max pour la section transversale externe Se de l'axe 21, et D2min et D2max pour la section transversale interne Si du manchon 22.

Ces sections sont choisies de façon telle que les dimensions minimale et maximale, D1min et D1max, de la section externe Se de l'axe 21 soient respectivement inférieures aux dimensions minimale et maximale, D2min et D2max, de la section interne Si du manchon 22, mais que la dimension maximale D1max de la section externe Se de l'axe 21 soit supérieure à la dimension minimale D2min de la section interne Si du manchon 22.

Par ailleurs, l'axe 21 et le manchon 22 sont respectivement pourvus, sur la dimension maximale D1max de la section externe Se de l'axe 21 et sur la dimension minimale D2min de la section interne Si du manchon 22, de reliefs de retenue axiale susceptibles de s'interpénétrer, à la manière de filets de vis et d'écrou.

Ainsi, lorsque l'axe 21 et le manchon 22 sont dans une première position relative de rotation, qui est celle de la figure 4 et dans laquelle la dimension maximale D1max de la section Se de l'axe 21 est alignée avec la dimension maximale D2max de la section Si du manchon 22, alors l'axe 21 et le manchon 22 sont libres en translation axiale relative.

En revanche, lorsque l'axe 21 et le manchon 22 sont dans une deuxième position relative de rotation, dans laquelle la dimension maximale D1max de la section Se de l'axe 21 est alignée avec la dimension minimale D2min de la section Si du manchon 22 comme ce serait le cas en tournant d'un quart de tour l'une des sections Se et Si illustrées à la figure 4, alors l'axe 21 et le manchon 22 sont bloqués en translation axiale relative.

Le dispositif de l'invention comprend par ailleurs des premiers moyens 3 de sollicitation en rotation, dont la fonction est précisément d'effectuer cette rotation de par exemple un quart de tour pour faire passer l'axe 21 et le manchon 22 de leur première à leur deuxième position relative de rotation, et des seconds moyens 4 de sollicitation en rotation agissant en sens inverse des premiers moyens 3.

Plus précisément, les premiers moyens 3 de sollicitation en rotation opèrent sélectivement une rotation du manchon 22 dans un premier sens R1 propre à assurer le blocage des deux éléments 21 et 22 en translation, alors que les seconds moyens 4 de sollicitation en rotation opèrent sélectivement une rotation du manchon 22 dans un second sens R2 inverse du premier R1 et propre à assurer le libre mouvement des deux éléments 21 et 22 en translation.

Pour ce faire, les premiers moyens 3 de sollicitation en rotation comprennent par exemple une chambre auxiliaire 30, un piston auxiliaire 31, un clapet 32, un ressort 33, une butée 34, une entrée 35 de la chambre auxiliaire 30, et une électrovalve 36.

La chambre auxiliaire 30 est partagée en trois compartiments 301 à 303, de volumes respectifs variables et complémentaires.

Les premier et troisième compartiments, respectivement 301 et 303, sont reliés à la pression atmosphérique, tandis que le deuxième compartiment 302 est sélectivement relié à la source de fluide SFH.

Le piston auxiliaire 31, qui est solidaire du manchon 22, est monté à rotation dans la chambre auxiliaire 30 et sépare l'un de l'autre les premier et deuxième compartiments, 301 et 302.

Le clapet 32 est monté à rotation dans la chambre auxiliaire 30 et sépare l'un de l'autre les deuxième et troisième compartiments, 302 et 303.

Le ressort 33 a pour fonction de solliciter le clapet 32 en rotation vers le piston auxiliaire 31, la rotation du piston auxiliaire 31 et celle du clapet 32 étant limitées chacune à moins d'un tiers de tour par la butée 34.

L'électrovalve 36 relie quant à elle, en configuration passante, l'entrée 35 de la chambre auxiliaire à la source de fluide SFH, cette entrée 35 s'ouvrant dans le deuxième compartiment 302 de la chambre auxiliaire 30.

Enfin, les seconds moyens 4 de sollicitation en rotation, qui agissent en sens inverse des premiers, comprennent en l'occurrence un ressort de torsion 40 précontraint entre le cylindre 10 et le manchon 22.

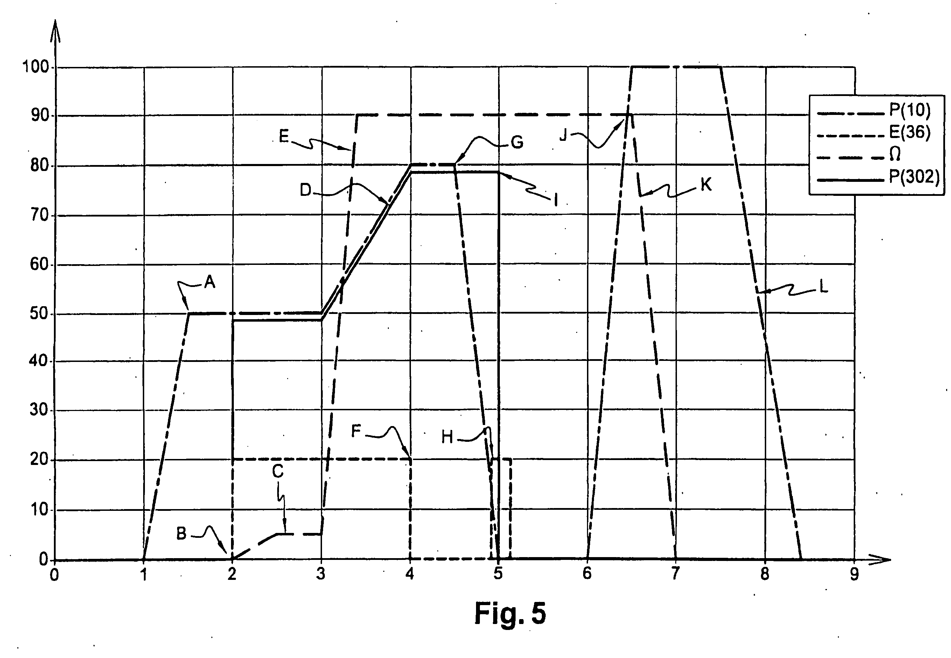

Le fonctionnement du dispositif ainsi constitué est expliqué ci-après en référence à la figure 5, dans laquelle P(10) désigne la pression dans le cylindre 10, E(36) désigne l'état de l'électrovalve 36, Ω désigne l'angle de rotation du manchon 22, et P(302) désigne la pression dans le second compartiment 302 de la chambre auxiliaire 30.

A l'état de repos, le piston auxiliaire 31, le clapet 32, et le ressort 33 sont dans la configuration illustrée à la figure 3a.

Lorsque le piston 11 doit être placé en position avancée et bloqué mécaniquement pour constituer l'élément de serrage du frein de parking, la pression P(10) dans le cylindre 10, qui évolue en suivant la pression P délivrée par la source SFH, est élevée jusqu'au point de fonctionnement A qui correspond à la pression minimale requise pour permettre au véhicule de tenir sur une pente normalisée.

Puis, au point de fonctionnement B, l'électrovalve 36 est placée dans un état passant, de sorte que la pression P(302) admise dans le compartiment 302 atteint celle qui règne dans le cylindre 10.

La pression s'exerçant alors sur le piston auxiliaire 31 opère une première rotation de ce piston et donc du manchon 22 (point de fonctionnement C).

L'élévation de la pression P délivrée par la source SFH (point D) et l'élévation correspondante de la pression P(302) provoque une augmentation de l'angle Ω de rotation du piston auxiliaire 31 et du manchon 22 (point E). Le piston auxiliaire 31 adopte alors la position illustrée à la figure 3b, tandis que le clapet 32, lui aussi repoussé par la pression P(302) mais vers la gauche sur la figure 3b, garde sa position initiale. L'axe 21 et le manchon 22 sont alors dans leur position relative de blocage en translation, et bloquent le piston 11 qui a atteint sa position avancée extrême.

La fermeture de l'électrovalve 36 (point F) piège la haute pression dans le compartiment 302.

La pression P délivrée par la source SFH est alors abaissée (point G), ce qui entraîne la chute de la pression P(10) régnant dans le cylindre 10.

Dans ces conditions, le piston 11, bien que cessant d'être poussé par la pression hydraulique, reste dans sa position avancée extrême dans la mesure où il reste mécaniquement bloqué par son appui sur la colonne télescopique 20 que forment ensemble l'axe 21 et le manchon 22 et sur laquelle le piston 11 exerce une contrainte de compression axiale.

L'ouverture transitoire de l'électrovalve 36 (point H) fait alors chuter la pression dans la chambre auxiliaire 30 (point I), ce qui permet au compartiment 302 de se vider sous l'effort qu'exerce sur lui le clapet 32 poussé par le ressort 33, ce clapet et ce ressort adoptant ainsi la position illustrée à la figure 3c.

Le piston 11 est alors mécaniquement bloqué dans sa position avancée extrême pour une période indéterminée.

Lorsque ce piston 11 doit être replacé en position reculée pour débloquer le frein de parking, la pression P délivrée par la source de pression SFH est à nouveau augmentée, entraînant l'élévation corrélative de la pression P(10).

Lorsque la pression P(10) exercée sur le piston 11 a totalement soulagé la colonne télescopique 20 de sa contrainte axiale (point J), le ressort de torsion 40 devient prédominant sur les forces de frottement et sur le ressort 33, de sorte qu'il ramène le piston auxiliaire 31 et le clapet 32 vers leur position de repos (point K), ce piston auxiliaire 31 et ce clapet 32 passant ainsi de leur position illustrée à la figure 3c à leur position illustrée à la figure 3a.

L'axe 21 et le manchon 22 sont ainsi replacés dans leur position relative de libre coulissement, telle qu'illustrée à la figure 4.

Lorsque la pression P délivrée par la source SFH est ramenée à une valeur nulle (point L), le piston 11 retourne donc vers sa position reculée.

## Revendications

1. Dispositif de blocage sélectif pour frein hydraulique, comprenant un cylindre hydraulique (10) relié à une source de fluide hydraulique (SFH), un piston (11) monté sélectivement coulissant dans le cylindre (10) depuis une position reculée vers une position avancée en réponse à l'établissement d'une haute pression dans le cylindre (10), et des moyens de retenue (2) pour maintenir mécaniquement le piston (11) en position avancée, **caractérisé en ce qu'**il comprend des premiers moyens (3) de sollicitation en rotation et des seconds moyens (4) de sollicitation en rotation agissant en sens inverse des premiers (3), **en ce que** les moyens de retenue (2) comprennent une colonne télescopique (20) formée d'un élément mâle (21) et d'un élément femelle (22) coaxiaux libres en translation axiale relative dans une première position de rotation relative et bloqués en translation axiale relative dans une seconde position de rotation relative, **en ce qu'**un premier (21) de ces éléments est solidaire du piston (11) et **en ce qu'**un second (22) de ces éléments est monté à rotation par rapport au cylindre (10), est solidaire du cylindre (10) en translation, et sélectivement commandé en rotation par les premiers moyens (3) de sollicitation en rotation et par les seconds moyens (4) de sollicitation en rotation.

2. Dispositif suivant la revendication 1, **caractérisé en ce que** les premiers moyens (3) de sollicitation en rotation opèrent sélectivement une rotation du second élément (22) dans un premier sens (R1) propre à assurer le blocage des deux éléments (21, 22) en translation, et **en ce que** les seconds moyens (4) de sollicitation en rotation opèrent sélectivement une rotation du second élément (22) dans un second sens (R2) inverse du premier (R1) et propre à assurer le libre mouvement des deux éléments (21, 22) en translation.

3. Dispositif suivant la revendication 2, **caractérisé en ce que** les premiers moyens (3) de sollicitation en rotation comprennent une chambre auxiliaire (30) partagée en trois compartiments (301 à 303) dont le premier (301) et le troisième (303) sont reliés à la pression atmosphérique et dont le deuxième (302) est sélectivement relié à la source de fluide hydraulique (SFH), un piston auxiliaire (31) solidaire du second élément (22), monté à rotation dans la chambre auxiliaire (30) et séparant les premier et deuxième compartiments (301, 302), un clapet (32) monté à rotation dans la chambre auxiliaire (30) et séparant les second (302) et troisième (303) compartiments, un ressort (33) sollicitant le clapet (32) en rotation vers le piston auxiliaire (31), une butée (34) limitant la rotation du piston auxiliaire (31) et la rotation du clapet (32) à moins d'un tiers de tour, une entrée (35) de la chambre auxiliaire (30), s'ouvrant dans le deuxième compartiment (302), et une électrovalve (36) reliant sélectivement l'entrée de la chambre auxiliaire à la source de fluide (SFH).

4. Dispositif suivant l'une quelconque des revendications 2 et 3, **caractérisé en ce que** les seconds moyens (4) de sollicitation en rotation comprennent un ressort de torsion (40) précontraint entre le cylindre (10) et le second élément (22).

5. Dispositif suivant l'une quelconque des revendications précédentes, **caractérisé en ce que** les éléments mâle et femelle (21, 22) sont respectivement constitués d'un axe (21) et d'un manchon (22) présentant des sections transversales respectivement externe (Se) et interne (Si) non circulaires, **en ce que** la section transversale externe (Se) de l'axe (21) présente des dimensions minimale et maximale (D1min, D1max), **en ce que** la section transversale interne (Si) du manchon (22) présente des dimensions minimale et maximale (D2min, D2max), **en ce que** les dimensions minimale et maximale (D1min, D1max) de la section externe (Se) de l'axe (21) sont respectivement inférieures aux dimensions minimale et maximale (D2min, D2max) de la section interne (Si) du manchon (22), et **en ce que** la dimension maximale (D1max) de la section externe (Se) de l'axe (21) est supérieure à la dimension minimale (D2min) de la section interne (Si) du manchon (22), l'axe (21) et le manchon (22) étant respectivement pourvus, sur la dimension maximale (D1max) de la section externe (Se) de l'axe (21) et sur la dimension minimale (D2min) de la section interne (Si) du manchon (22), de reliefs de retenue axiale susceptibles de s'interpénétrer.

## Claims

1. Selective immobilization device for a hydraulic brake, comprising a hydraulic cylinder (10) connected to a source of hydraulic fluid (SFH), a piston (11) mounted selectively to slide in the cylinder (10) from a retreated position to an advanced position in response to the establishing of a high pressure in the cylinder (10), and retaining means (2) for mechanically keeping the piston (11) in an advanced position, **characterized in that** it comprises first rotation-inducing means (3) and second rotation-inducing means (4) acting in the opposite direction to the first ones (3), **in that** the retaining means (2) comprise a telescopic column (20) formed of a male element (21) and of a female element (22) that are coaxial and free in terms of relative axial translation in a first relative position of rotation and immobilized in terms of relative axial translation in a second relative position of rotation, **in that** a first (21) of these elements is secured to the piston (11) and **in that** a second (22) of these elements is mounted to rotate with respect to the cylinder (10), is secured to the cylinder (10) in terms of translation, and selectively made to rotate by the first rotation-inducing means (3) and by the second rotation-inducing means (4).

2. Device according to Claim 1, **characterized in that** the first rotation-inducing means (3) selectively cause the second element (22) to rotate in a first direction (R1) able to immobilize the two elements (21, 22) in terms of translation, and **in that** the second rotation-inducing means (4) selectively cause the second element (22) to rotate in a second direction (R2) the opposite to the first (R1) and able to allow the two elements (21, 22) to move freely in terms of translation.

3. Device according to Claim 2, **characterized in that** the first rotation-inducing means (3) comprise an auxiliary chamber (30) divided into three compartments (301 to 303) of which the first (301) and the third (303) are connected to atmospheric pressure and of which the second (302) is selectively connected to the source of hydraulic fluid (SFH), an auxiliary piston (31) secured to the second element (22), mounted to rotate in the auxiliary chamber (30) and separating the first and second compartments (301, 302), a valve (32) mounted to rotate in the auxiliary chamber (30) and separating the second (302) and third (303) compartments, a spring (33) urging the valve (32) to rotate towards the auxiliary piston (31), an end stop (34) limiting the rotation of the auxiliary piston (31) and the rotation of the valve (32) to less than one third of a turn, and an inlet (35) of the auxiliary chamber (30), opening into the second compartment (302), and an electrically operated valve (36) selectively connecting the inlet of the auxiliary chamber to the source of fluid (SFH).

4. Device according to either one of Claims 2 and 3, **characterized in that** the second rotation-inducing means (4) comprise a torsion spring (40) prestressed between the cylinder (10) and the second element (22).

5. Device according to any one of the preceding claims, **characterized in that** the male and female elements (21, 22) respectively consist of a spindle (21) and of a sleeve (22) having respectively external (Se) and internal (Si) non-circular cross sections, **in that** the external cross section (Se) of the spindle (21) has minimum and maximum dimensions (D1min, D1max), **in that** the internal cross section (Si) of the sleeve (22) has minimum and maximum dimensions (D2min, D2max), **in that** the minimum and maximum dimensions (D1min, D1max) of the external section (Se) of the spindle (21) are respectively smaller than the minimum and maximum dimensions (D2min, D2max) of the internal section (Si) of the sleeve (22), and **in that** the maximum dimension (D1max) of the external section (Se) of the spindle (21) is greater than the minimum dimension (D2min) of the internal section (Si) of the sleeve (22), the spindle (21) and the sleeve (22) being respectively provided, on the maximum dimension (D1max) of the external section (Se) of the spindle (21) and on the minimum dimension (D2min) of the internal section (Si) of the sleeve (22), with axial retaining reliefs able to interpenetrate one another.

## Patentansprüche

1. Vorrichtung zur selektiven Blockierung für eine hydraulische Bremse, mit einem mit einer Hydraulikfluidquelle (SFH) verbundenen Hydraulikzylinder (10), einem Kolben (11), der so angebracht ist, dass er in Reaktion auf den Aufbau eines hohen Drucks im Zylinder (10) selektiv im Zylinder (10) von einer zurückgesetzten Stellung in eine vorgeschobene Stellung gleitet, und mit Haltemitteln (2), um den Kolben (11) mechanisch in der vorgeschobenen Stellung zu halten, **dadurch gekennzeichnet, dass** sie erste Mittel (3) zur Drehbeaufschlagung und zweite Mittel (4) zur Drehbeaufschlagung aufweist, die entgegengesetzt zu den ersten Mitteln (3) wirken, die Haltemittel (2) eine Teleskopsstange (20) aufweisen, die aus einem Steckelement (21) und einem Aufnahmeelement (22) besteht, welche koaxial verlaufen, sich in einer ersten Stellung zur Relativdrehung frei in einer relativen axialen Translationsbewegung verlagern können und deren relative axiale Translationsbewegung in einer zweiten Stellung zur Relativdrehung blockiert ist, ein erstes Element (21) dieser Elemente fest mit dem Kolben (11) verbunden ist und ein zweites Element (22) dieser Elemente in Bezug auf den Zylinder (10) drehbar angebracht ist, translatorisch fest mit dem Zylinder (10) verbunden ist und selektiv von den ersten Mitteln (3) zur Drehbeaufschlagung und von den zweiten Mitteln (4) zur Drehbeaufschlagung in Drehung versetzt wird.

2. Vorrichtung nach Anspruch 1, **dadurch gekennzeichnet, dass** die ersten Mittel (3) zur Drehbeaufschlagung selektiv eine Drehung des zweiten Elements (22) in eine erste Richtung (R1) bewirken, die dazu geeignet ist, die translatorische Blockierung der beiden Elemente (21, 22) zu gewährleisten, und die zweiten Mittel (4) zur Drehbeaufschlagung selektiv eine Drehung des zweiten Elements (22) in eine zur ersten Richtung (R1) entgegengesetzte Richtung (R2) bewirken, die dazu geeignet ist, die freie translatorische Bewegung der beiden Elemente (21, 22) zu gewährleisten.

3. Vorrichtung nach Anspruch 2, **dadurch gekennzeichnet, dass** die ersten Mittel (3) zur Drehbeaufschlagung eine Hilfskammer (30) aufweisen, die in drei Bereiche (301 bis 303) unterteilt ist, wobei der erste Bereich (301) und der dritte Bereich (303) mit dem atmosphärischen Druck verbunden sind und der zweite Bereich (302) selektiv mit der Hydraulikfluidquelle (SFH) verbunden ist, einen Hilfskolben (31), der mit dem zweiten Element (22) fest verbunden ist, drehbar in der Hilfskammer (30) angebracht ist und den ersten und den zweiten Bereich (301, 302) trennt, ein Ventilelement (32), das drehbar in der Hilfskammer (30) angebracht ist und den zweiten Bereich (302) und den dritten Bereich (303) trennt, eine Feder (33), die das Ventilelement (32) zum Hilfskolben (31) hin in Drehung beaufschlagt, einen Anschlag (34), der die Drehung des Hilfskolbens (31) und die Drehung des Ventilelements (32) auf weniger als eine Dritteldrehung begrenzt, einen Einlass (35) der Hilfskammer (30), der in den zweiten Bereich (302) mündet, und ein Magnetventil (36), das selektiv den Einlass der Hilfskammer mit der Fluidquelle (SFH) verbindet.

4. Vorrichtung nach einem der Ansprüche 2 und 3, **dadurch gekennzeichnet, dass** die zweiten Mittel (4) zur Drehbeaufschlagung eine Torsionsfeder (40) aufweisen, die zwischen dem Zylinder (10) und dem zweiten Element (22) vorgespannt ist.

5. Vorrichtung nach einem der vorhergehenden Ansprüche, **dadurch gekennzeichnet, dass** das Steckelement und das Aufnahmeelement (21, 22) aus einer Achse (21) bzw. einer Hülse (22) mit einem nicht kreisförmigen Außenquerschnitt (Se) bzw. Innenquerschnitt (Si) bestehen, der Außenquerschnitt (Se) der Achse (21) eine minimale und eine maximale Abmessung (D1min, D1max) besitzt, der Innenquerschnitt (Si) der Hülse (22) eine minimale und eine maximale Abmessung (D2min, D2max) besitzt, die minimale und maximale Abmessung (D1min, D1max) des Außenquerschnitts (Se) der Achse (21) geringer sind als die minimale Abmessung bzw. die maximale Abmessung (D2min, D2max) des Innenquerschnitts (Si) der Hülse (22) und die maximale Abmessung (D1max) des Außenquerschnitts (Se) der Achse (21) größer ist als die minimale Abmessung (D2min) des Innenquerschnitts (Si) der Hülse (22), wobei die Achse (21) und die Hülse (22) auf der maximalen Abmessung (D1max) des Außenquerschnitts (Se) der Achse (21) und auf der minimalen Abmessung (D2min) des Innenquerschnitts (Si) der Hülse (22) jeweils mit Erhebungen zum axialen Halten versehen sind, die ineinander greifen können.
